# EUROPEAN PATENT SPECIFICATION

(11) **EP 2 812 386 B1**
(45) Date of publication and mention of the grant of the patent: **24.04.2019**
(21) Application number: 13716382.0
(22) Date of filing: 06.02.2013
(51) Int. Cl.: C08J 11/08, C08L 95/00

(54) **AN ENVIRONMENT FRIENDLY METHOD FOR DISPOSAL OF WASTE PLASTICS THROUGH CONVERSION OF POLYETHYLENE TEREPHTHALATE (PET) POLYMERS TO ANTI-STRIPPING COMPOUNDS**
UMWELTFREUNDLICHE VERFAHREN ZUR ENTSORGUNG VON KUNSTSTOFFABFÄLLEN DURCH UMWANDLUNG VON POLYETHYLENTEREPHTHALAT (PET)-POLYMEREN IN ABLÖSESCHUTZVERBINDUNGEN
PROCÉDÉ ÉCOLOGIQUE D'ÉLIMINATION DE DÉCHETS PLASTIQUES PAR CONVERSION DE POLYMÈRES DE POLY(TÉRÉPHTALATE D'ÉTHYLÈNE) (PET) EN DES COMPOSÉS D'ADHÉSIVITÉ

(30) Priority: 09.02.2012 IN 140KO2012
(43) Date of publication of application: 17.12.2014
(73) Proprietor: Indian Oil Corporation Ltd., Kolkata 700 068 West Bengal (IN)
(72) Inventor: BHATNAGAR, Akhilesh Kumar, Haryana 121 007 (IN); PADHAN, Rabindra Kumar, Haryana 121 007 (IN); GUPTA, Anurag A, Haryana 121 007 (IN); AGADI, Krishna, Haryana 121 007 (IN)
(74) Representative: Høiberg P/S
(86) International application number: PCT/IB2013/050974
(87) International publication number: WO 2013/118057

(56) References cited:
- US-A- 5 801 204
- US-A1- 2005 223 941
- SPYCHAJ T.: J MAT CYCLES AND WASTE MANAGEMENT, vol. 3, 2001, pages 24-31, XP002697862, cited in the application

## Description

### FIELD OF THE INVENTION

The present invention relates to anti stripping compounds for bitumen in general, and to an environment friendly method for disposal of waste plastics through conversion of polyethylene terephthalate (PET) polymers to anti-stripping compounds in particular. The invented process is for improving anti-stripping properties of bitumen and for safe and environment friendly large scale disposal of used PET polymer through a green chemistry approach.

### BACKGROUND OF THE INVENTION AND PRIOR ART

In recent past, problems relating to water damage to bituminous pavement have received attention of researchers toward a phenomena referred to as "stripping". Stripping relates to bituminous pavements that exhibit separation of the bitumen from the aggregate surfaces in bituminous concrete due primarily to the action of water on the bitumen over time under various environmental conditions. Use of antistripping chemicals in bitumen is practiced world over since past six decades and a variety of chemistry has been examined.

Bitumen is a dark-brown to black sticky material, solid or semi-solid in consistency, in which the primary constituents are a mixture of paraffinic and aromatic hydrocarbons and heterocyclic compounds containing sulfur, nitrogen and oxygen. The particle size of mineral aggregate used in bituminous concrete composition may vary over a wide range, such as from 2×10⁻⁵ to 6×10⁻² meters in diameter or the aggregate may be of a fairly uniform size. Mineral aggregates employed in bituminous compositions also range in character from hydrophilic to hydrophobic. It has long been known that mineral aggregates have a greater attraction for water than for oil or bitumen. In general siliceous and acidic minerals such as sands and gravels are highly hydrophilic, whereas calcareous and alkaline materials such as limestone are slightly hydrophilic. Due to these variations, it is difficult to obtain and maintain a satisfactory bitumen coating on the mineral aggregate particles when water is present. A poor bitumen coating on the mineral aggregate leads to break up of the bituminous concrete and commonly results in poor pavement quality with highly reduced life span. A successful method of increasing pavement life has been to add anti-stripping additives to the bituminous compositions. Such additives increase the hydrophobicity of the aggregate, thereby strengthening and preserving the bitumen-aggregate bond. In view of emerging need to protect bituminous pavements from damage due to their exposure to moisture, improvement in bitumen properties through use of chemical additives is currently a much investigated subject.

Plastics, in modern civilization, have become rather indispensable due to certain inherent advantages they offer such as their light weight, ease of manufacture on large scale, high degree of flexibility and less consumption of energy per unit volume as compared to metals in manufacturing process. The most commonly used plastics, under the class "thermoplastic", are low density polyethylene (LDPE), linear low density polyethylene (LLDPE), polypropylene (PP), polyproylene copolymer (PPCP), polyvinyl chloride (PVC), polystyrene (PS), polyethylene terphthalate (PET) etc and together they constitute 80% of total polymers produced worldwide. The polyester industry makes up about 18% of world polymer production and is third after polyethylene (PE) and polypropylene (PP). Because PET is an excellent barrier material, plastic bottles made from PET are widely used as drinking water/soft drinks containers. The majority of the world's PET production is for synthetic fibers (in excess of 60%) with bottle production accounting for around 30% of global demand. Over the last few years, PET use for water bottles has grown at exceptional rates, driving PET solid-state resin demand and its production in the developed regions, growing at an average annual rate of approximately 4.3% during 2009-2013. India uses about 14 MMT plastics as against US consumption of 40 MMT and China's consumption of about 38 MMT. Large scale use of these plastic materials in various forms and their poor recycle/disposal practices have made them omnipresent and are identified as a major culprit for environmental pollution. This acute problem has led to global debate on "Plastic vs. No Plastics" and placed plastics under shadow of doubt about their real usefulness.

Disposal of plastic material in general and PET based products like bottles for water/soft drinks etc. in particular, has become mainly responsible for current pollution menace on streets. This pollution, besides being health hazard, is a particularly visible eye sore, in streets, near railway tracks, market places etc all over the world and more particularly in growing economies like India. To promote the conservation and recycling of plastic materials, several countries made legal provisions e.g. US promulgated the "Resource Conservation and Recovery Act (RCRA)" in 1976 and India developed "Recycled Plastic manufacture and Usage Rule) in 1999, with further amendments in 2003. Different options which are practiced today to recycle/reuse plastics include, but not limited to, land filling, use in solid fuel briquetting, promotion of biodegradable polymers, primary and secondary recycling of waste plastics, use in blast furnace as reducing agent, use in cement industry for energy recovery, gasification to liquid and gaseous fuels/lubricants, producing value added products, such as flouro-lubricants from waste teflon, using plastics as raw material for some chemical processing such as converting PET into Bis-(hydroxyl ethylene carboxymide)-benzene, which is used as anti-corrosion additive in modern paints, etc.

In recent years one of the important developments in the field of alternate application of virgin or used plastic/rubber material is their use in making polymer/rubber modified bitumen (PMBs/RMBs) as value added product of bitumen. Presently PMBs/RMBs are used in huge quantities in making road highways infrastructure. PMBs/RMBs offer some definitive advantage over conventional bitumen such as lower susceptibility to daily and seasonal temperature variations, higher resistance to deformation at elevated pavement temperatures, better age resistance properties, better adhesion, less cracking even in heavy traffic conditions etc. The use of PMBs/RMBs has begun in India in the last decade, particularly under highway development programme, albeit slowly due to high cost of popular polymers such as SBS, EVA etc which are recommended modifiers for bitumen.

Bitumen and aggregate materials useful for building of highways are well known. In order to obtain pavement of high quality and strength, more effective ways are to use acidic rocks (SiO₂ content of rocks > 66%) such as granite (a silicate rock) which has high strength and provides good resistance to wear and skid. But the acidic rocks have poor adhesion to bitumen leading to easy stripping of the bitumen, particularly in presence of moisture. To prevent bitumen stripping, studies have been undertaken on anti-striping chemicals whose addition into bitumen can greatly improve the adhesion between bitumen and acidic aggregate materials and thus increase the life of the pavement.

**Curtis (1990)** in his review article on liquid antistripping chemicals "SHRP-A/UIR-90-016 Strategic Highway Research Programme" covered examples of some basic additives used in the past for this purpose, which include the primary alkyl amines, e.g., lauryl amine, stearyl amine, and the alkylene diamines, particularly the alkyl-substituted alkylene diamines, e.g., N-stearyl-1,3-propylene diamine. Amides are also used in some anti-stripping formulations. Most popular chemicals in general belong to following groups
- Nitrogen containing oil soluble liquid additives, mostly fatty acid based polyamine polyamides
- Polymers such as SBS, EVA etc showing anti-stripping properties
- Cationic surfactants
- Mineral based chemicals such as lime
- Organo- compounds Silicone

Carlo Gravarini and G. Rinaldi ("Development of new Adhesion Agents for Asphalt Cement", Ind. Eng. Chen. Res. 1989, 28, 1231-36*)* reported good antistripping property of product derived from reaction of tetra ethylene pentamine (TEPA) and formaldehyde (CH₂O) or with formaldehyde (CH₂O) and phenol.

Al-Handy et al ("Starch as a modifier for asphalt paving material"; Const Bldg mat 25 (2011) 14-20*)* reported the use of starch as more cost effective binder modifier for road pavements and more specifically for special paving construction sites when fuel or chemical resistance is desired.

Evans E.Din US patent 3246008, 1966 claimed significant antistrip property in reaction product of ozonized fatty acids and polyamines.

**Sawatzky, H.** (1982) *(in European Patent* EP0549379*)* reported that nitrogen containing fraction derived from sewage sludge, improves the adhesion of asphalt to aggregate in asphalt concrete, and is an improved anti-stripping agent.

Hesberger in US Patent no 2430815 (1945**)** reported use of Tall Oil to increase the adhesivity of bitumen to mineral aggregates. The use of Dihydroxy aluminium sulphonates as an anti stripping agent in bitumen was described.

Jack N. Dybalski, of Armak Company (in AAPT annual meeting Kansas City, Missouri 1982*)* recommended treatment of aggregates with cationic type surfactants to get maximum antistrip behavior.

D.N. Little & Jon A. Epps (2001) (National Lime Association 2001; "The benefits of hydrated lime in hot mix asphalt*")* reported use of lime as antistrip agent which also gives certain additional advantage such as stiffening of bituminous binder, control of fracture growth at low temperature, reducing aging effect and altering plastic properties of bitumen.

Firas Awaja (2005) gives a review (European Polymer Journal 41(2005)1453-1477*)* on recycling of PET covering process engineering in PET thermal degradation, chain extension process, reactive extrusion process etc.

Paszum D. et al (1997) (Ref: Ind Eng Res 1997,36,1373*)* reviewed chemical recycling of PET and reported that methanolysis and glycolysis of used PET has been used commercially in coating materials and as plasticizer. Chemical degradation through aminolysis has been explored using different amines such as allyl amines, morpholines, hydrazine, polyamines etc.

**Shukla (2006)** (*Ref*: S.R.Shukla, Ajay M Harad, Polymer Degradation and Stability 91,2006,1850-1854) reported reaction of PET with ethanolamine using acetic acid, sodium acetate and potassium sulphate as catalyst which was completed in 8 hours resulting in bis(2-hydroxyethylene) terephthalamide (BHETA). The paper reports use of PET material and amine in molar ratio of 1:6 and maximum conversion efficiency into BHETA Bis (2-Hydroxy Ethylene) Terphthalamide, in the range of 68.2 to 83.2% under different catalytic conditions and temperature range of 170°C - 180°C.

Magda E.T. et al (2010) (Polymer degradation and stability 95,(2010)187-194*)* studied chemical recycling of post consumer PET bottle using ethanolamine and Dibutyl tin oxide (DBTO), sodium acetate, cetyl trimethyl ammonium bromide as catalyst at 190°C in about 62% yields and used the reaction product in developing anticorrosion paints.

Spychaj T. (2001) (J Mat cycles and waste management 3,24-31,2001*))* reported aminolysis and aminoglycolysis of waste PET in which experiments were conducted at 200-210°C (with a molar ratio of recurrent polymer unit to amine of 1:2). The amines used were diethylenetriamine, triethylenetetramine and their mixtures, p-phenylenediamine or triethanolamine. The products thus developed were tried out as hardener for liquid epoxy resin.

From the prior art covered above, it becomes clear that in PET aminolysis process to recycle waste PET, the conditions used were quite harsh and makes use of a range of catalysts, some of which are quite costly and hazardous. There are also no reports of using the product derived from PET by aminolysis for any applications in petroleum industry in general and bitumen in particular.

In addition to above, some alternate chemistry based products have been tried over the years for antistripping properties. However, prior art documents do not mention any work on antistripping chemicals which may have been derived from PET polymers.

### OBJECTS OF THE INVENTION

An object of the invention is to provide a process to convert PET polymers, whether used or virgin, into chemical compounds which show excellent anti-stripping properties in bitumen.

Another object of the invention is to provide a process for improving anti-stripping properties of bitumen with such chemical compounds.

Yet another object of the invention is to provide a process which operates in relatively low temperature range of 110 to 160°C.

One more object of this invention is to demonstrate that molar ratio of costly amines to PET is significantly reduced when conditions of the present invention, i.e. use of solvent, are met during aminolysis of PET.

Another object of the invention is to provide a process which achieves a maximum conversion efficiency of 100% into diamido diamine products mixture and produces no effluent.

Yet another object of the invention is to provide a process where the reaction time for condensation of polyamine and PET is significantly low when compared with the prior art.

A further object of the invention is to provide a process to utilize waste PET, which is a threat to environment and is available commercially in different physical forms, for conversion into industrially useful product.

A still further object of the invention is to provide a process that is a single pot reaction, energy efficient and is completed in lesser time.

Yet another object of this invention is to provide a process wherein no catalyst is required during aminolysis of PET thus obviating the need of toxic catalysts.

Another object of the invention is to provide a process for effective and large scale disposal of PET polymers which are environmental hazards.

A further object of the invention is to provide a process for preparation of a bituminous cement mixture per se as well as the combination of that mixture with an aggregate in a form for road paving, i.e. a bituminous concrete, which has high anti-stripping properties.

### SUMMARY OF THE INVENTION

The present invention discloses an environment friendly method for disposal of waste plastics through conversion of polyethylene terephthalate (PET) polymers to anti-stripping compounds. It is achieved through green chemistry approach. The PET polymer is either recycled or virgin and is used as synthon. The process gives a solution for safe and environment friendly large scale disposal of used PET polymer such as used PET bottles and containers which are discarded after use, and become a major source of environment pollution.

The anti-stripping compound of the invention is the reaction product obtained by reacting an amine with used PET polymer which is a major culprit for environmental pollution in the cities. These reactions, using PET as synthon, can be carried out with a number of different reactants (amines, polyamines) under a variety of different reaction conditions. It is reacted with a polyamine, preferably tetraethylene pentamine in xylene solution, when the polyamine undergoes aminolysis reaction with PET without any catalyst and at a relatively low temperature in the range of 110°C to 160°C. The process achieves the maximum conversion efficiency of 100% into diamino diamido mixture of compounds and produces no effluent. Typical reaction conditions are given in Table-1.

A process for producing a bituminous concrete having high anti-stripping properties is also disclosed.

### DETAILED DESCRIPTION OF THE INVENTION

The invention will now be described in an exemplary embodiment. There may be other embodiment of the same invention, all of which are deemed covered by this description.

The present invention discloses a process to use PET polymers, whether used or virgin, as synthon and convert them into chemical compounds which show excellent anti-stripping properties in bitumen, and also a process for improving the anti-stripping properties of bituminous concrete mixture by using such chemical compounds. The method comprises adding to an asphalt cement mixture, a compound which is produced by reacting an amine or polyamine and PET with or without the presence of catalysts and with or without the presence of solvent or mixture thereof. The reaction components may be reacted together simultaneously or alternatively in a separately identified sequence.

The invention represents an example of "green chemistry" since it is a single pot reaction with atom economy of high order and converts an environmentally hazardous material into an industrially useful product. The study, conducted in the present invention showed that synthesis, with or without solvents and without catalyst as well, had the advantages of high yields, facile reaction with small energy consumption. Moreover, the reaction produces no effluents.

In laboratory experiment, anti-stripping agents for bitumen have been obtained by condensation of several polyamines (but not limited to) such as tetraethylenepentamine (TEPA), triethylenetetramine (TETA), diethylenetriamine (DETA) and ethylenediamine (EDA), propanediamine (PDA), hexamethylene triamine (HMT), p-Phenylenediamine etc. It was observed that the reaction product mixture in 0.3 to 0.5% dosages, had given excellent anti-strip properties with 100% anti-strip performance in boiling water test (Table 2), both before and after TFOT test including retained Marshal Stability test (Table 3). Reaction products of synthon PET with diamines, other than polyamines, did show anti-stripping properties but only with higher dosages i.e 1% or above and were not so effective. The reaction time for condensation of polyamine and PET is significantly low in this present invention when compared with the prior art.

A bituminous concrete mixture developed under this invention is having therein a minor amount of an anti-stripping chemical mixture, produced by the condensation reaction of a polyamine and PET in solvents with or without the presence of catalysts.

Unlike what is reported in prior art, polyamines can undergo aminolysis reactions with PET even without a catalyst and at relatively low temperatures (110° to 160°C) when reaction is carried out in solvents like toluene, xylene, decalin, tetralin, o-chlorobenzene or mixtures thereof.

Moreover, no catalyst is required during aminolysis of PET when a solvent like toluene, xylene, decalin, tetralin, o-chlorobenzene or mixtures thereof etc are used, thus obviating the need of toxic and costly catalysts like lead acetate, dibutyl tin oxide (DBTO) etc as used in the prior art.

Further, molar ratio of costly amines to PET is significantly reduced when conditions of the present invention, i.e. use of solvent, are met during aminolysis of PET. Instead of use of a Polyamine:PET molar ratio of 1:2 as reported in prior art, the present invention reports successful completion of reaction in ratios ranging from 1:1 to 1:6.

The reaction is performed under green chemistry concept which ensures that the process which is a one step reaction, is done at relatively lower temperature, ensures atom economy, produces no effluent and uses no catalyst. The invention also provides protection of the environment since it converts waste PET polymers, which are environmental hazards, into useful antistripping chemicals for bitumen.

The present invention gives an economic and practical solution to industrially utilize used and waste PET polymer, thus minimizing a major source of concern in keeping the environment free of pollution and hazardous materials. It opens up a new avenue for effective and large scale disposal possibilities of PET polymers.

The anti-stripping compounds disclosed in this invention impart improved adhesion between the bitumen concrete and the aggregate surfaces to which the bitumen is applied. Such surfaces are less subject to deterioration caused by the stripping effects of water in combination with other environmental effects.

In addition to providing a method for improving the anti-stripping properties of bitumen, the invention provides a bituminous cement mixture per se as well as the combination of that mixture with an aggregate in a form for road paving, i.e. a bituminous concrete. The mixture is comprised of bitumen cement, having therein minor amounts of the anti-stripping agent prepared in accordance with the present invention and which is produced by the condensation of the amines/polyamines and PET. The PET and amines can be reacted together in a variety of ratios, kept within the range of (1):(1-30) but more preferably in (1):(2) ratio and in solvents and their mixtures. When the reactant components are reacted together, they form a statistical mixture of compounds which constitute the anti-stripping agent of the present invention. Specifically, the anti-stripping agent is in the form of a composition containing a statistical mixture of compounds encompassed by the general structural formula

R'₁NCH₂CH₂-(CH₂CH₂NH)ₙ-CO-C₆H₄-CO-(NHCH₂CH₂)ₙCH₂CH₂NR"₂

Where N is nitrogen, R'₁ and R"₂ are each independently a hydrogen or alkyl moiety and n is an independent integer lying in the range of 1 to 10. R'₁N and or R"₂N could also be alkyl or substituted aromatic groups or an oligomer derived from aminolysis of PET.

A bituminous concrete having high anti-stripping properties is prepared by adding minor amounts in the range of 0.1 to 5% by weight of the anti-stripping agent according to the present invention to the bitumen cement and mixing with an aggregate in the form of local granite rocks.

### Evaluation of Antistripping Additives:

There are different performance tests, based both on laboratory and field testing, for evaluating anti-stripping properties developed over the years but none is accepted fully as correlating with real field conditions. These tests have been classified in different categories such as Dynamic Immersion tests, Static Immersion tests, Water Boiling tests, Chemical Immersion tests, Abrasion tests, Simulated Traffic tests Quantitative Coating Evaluation tests, Non-Destructive tests, Immersion-Mechanical tests. Boiling water test, Marshall Stability test and freeze-thaw test, which are commonly practiced to quickly judge the anti-stripping properties of various chemicals and aggregates. Some of these tests are included in relevant ASTM D 3625-96 or IS.6241/71 specifications.

Two performance tests, namely hot water immersion test and retained marshal stability were used for evaluation of chemicals under this invention and a summary of the tests are as follows:

### Hot Water Immersion Tests

Boiling Water Test is a visual rating of the extent of stripping after the mixture is boiled. 238 grams of washed and dry aggregate and the 12.5 gm of melted bitumen is doped with the anti-stripping agent, mixed properly and are kept in oven at 85-100°C. Then a 2,000 ml beaker is filled halfway with distilled water and boiled. The mixture is placed in boiling water for 10 minutes. Asphalt cement that is floating is skimmed off from the top. The water is cooled to room temperature and then poured off. The aggregate mixture is emptied onto a white paper towel and graded, then visually observed for the remaining percentage of coated area (not stripped by water). After 24 hours the aggregate mixture is observed again. A mixture that retains 75 percent to 85 percent of the asphalt cement is considered as acceptable for use in the field.

### Retained Marshal Stability Test

This method of test covers the procedures for testing bituminous mixes to determine optimum Asphalt Content and stability characteristics, including resistance to plastic flow and flow properties. The stability portion of the test measures the maximum load supported by the test specimen at a loading rate of 50.8 mm/minute. Load is applied to the specimen till failure, and the maximum load is designated as stability. During the loading, an attached dial gauge measures the specimen's plastic flow (deformation) as a result of the loading. The flow value is recorded in 0.25 mm (0.01 inch) increments at the same time when the maximum load is recorded

Some of antistripping chemicals, developed under this invention (Code named PET A, PET B, PET C and PET D and after blending with bitumen in appropriate ratio, have been tested for Hot water immersion tests (Table 2), Retained Marshal Stability test (Table 3) and Physico-chemical tests (Table 4). These tests confirm acceptability of developed product mixture as antistripping chemical for bitumen and their performance well comparable to commercial products, currently being used by oil industry.

### Experimental Procedures

### Materials:

Different materials used in analysis and reactants in the invention are described in this section.

### Aggregates:

Aggregates are local granite rocks employed in preparing the pavement. The stones used were regular, close to a cube in the shape, and of such particle size that 100% passed a 19-mm sieve and were retained on a 13.2-mm sieve. The stones are washed in distilled water to remove all fines, dried at 105 /-5 °C to constant weight, and stored in airtight containers until required for use.

### Bitumen:

Experiments were carried out with commercial VG 10 grade bitumen obtained from the Mathura refinery of the applicant, meeting BIS specification IS 73-2006. Typical properties of bitumen used are given in Table 5.

### Polyamines:

The invention encompasses the use of one or more amines and polyamines as reactant, represented by general structural formulae:

NR¹CH₂CH₂NH-(CH₂CH₂NH)ₙCH₂CH₂NR²

NR²(CH₂CH₂)ₙNR¹

NR¹(CH₂CH₂NHCH₂CH₂)ₙNR²

where N is nitrogen, R₁ and R₂ are each independently a hydrogen or alkyl moiety and n an independent integer in the range of 1 to 10. NR₁ and or NR₂ could singly or otherwise also be alkyl or substituted aromatic groups.

Some examples of useful alkylene polyamine include ethylene diamine, triethylene tetramine, propylene diamine, trimethylene diamine, hexamethylene diamine, decamethylene diamine, octamethylene diamine, di(heptamethylene)triamine, tripropylene tetramine, tetraethylene pentamine, trimethylene diamine, pentaethylene hexamine, di(trimethylene)triamine, N-(2-aminoethyl)piperazine, 1,4-bis(2-aminoethyl)piperazine. The amino compound can also be an aromatic polyamine such as the phenylene and napthylene diamines or hydrazines such as hydrazine itself and organo-hydrazines having hydrocarbon-based substituents of up to about 30 carbon atoms.

Other diamines which have been experimented with and tested in the current invention include ethylene diamine, triethylene tetramine, propylene diamine, trimethylene diamine, hexamethylene diamine, decamethylene diamine, octamethylene diamine, di(heptamethylene)triamine, tripropylene tetramine, tetraethylene pentamine, trimethylene diamine, pentaethylene hexamine, di(trimethylene)triamine, N-(2-aminoethyl)piperazine, 1,4-bis(2-aminoethyl)piperazine, and p-phenylenediamine. The reaction product mixture of these amines with PET under the condition specified showed varying degree of performance ranging from very good to good. The condensation products of diamines with synthon PET, which showed very good performance are tetraethylenepentamine (TEPA), triethylenetetramine (TETA) and diethylenetriamine (DETA).

### Polyethylene terephthalate (PET) polymer:

Polyethylene terephthalate commonly abbreviated PET, PETE or PET-P, is a thermoplastic polymer resin of the polyester family and is used in synthetic fibers; beverage, food and other liquid containers, thermoforming applications and engineering resins. The majority of the world's PET production is for synthetic fibers (in excess of 60%) with bottle production accounting for around 30% of global demand. The polyester industry makes up about 18% of world polymer production and is third after polyethylene (PE) and polypropylene (PP).

PET may exist both as an amorphous (transparent) and as a semi-crystalline polymer. The semi-crystalline material might appear transparent (particle size < 500 nm) or opaque and white (particle size up to a few microns) depending on its crystal structure and particle size. Its monomer can be synthesized by transesterification reaction between ethylene glycol and dimethyl terephthalate with methanol as a byproduct. Polymerization is through a polycondensation reaction of the monomers.

PET consists of polymerized units of the monomer ethylene terephthalate, with repeating C₁₀H₈O₄ units. The PET, used as synthon in this invention, covers a wide range in terms physicochemical properties including intrinsic viscosity and application fields(Table 6). These also and specifically include used and recycled PET based products such as bottles for drinking water, soft drinks, fibers, packaging materials, and engineering plastics and its IR spectra gives major peak at 1720 cm⁻¹ confirming the presence of ester functionality. The present invention specifically used two types of PET, namely bottle grade and fiber grade material, which were supplied by Reliance Industry Limited, India for laboratory work (Table 7).

### Catalysts:

Prior art for aminolysis reactions of PET with amines include use of several catalysts such as dibutyl tinoxide (DBTO), Magnesium acetate tetra hydrate, calcium acetate monohydrate, calcium acetate hydrate, barium acetate, cobalt(II) acetate tetra hydrate, aluminum acetate, lithium acetate, sodium acetate, lead(IV) acetate, manganese(II) acetate, Tin(II)acetate and Zinc acetate dihydrates. The reaction with catalysts are generally conducted at a temperature range of 180°C to 220°C and takes about 8 hours to complete. In the present invention, an attempt was made to perform this reaction without the presence of catalyst and it was established that reaction done in a solvent helps in significant reduction in the temperature atleast by 30°C and time of reaction by about 4 hours.

### Solvents:

It was established that the use of solvent helped in reaction progress and in reducing the temperature requirements. Solvents such as tetralin, decalin, Dichlorobenzene, Trichlorobenzene, Sulpholane, Xylene, Toluene or mixture thereof have been used. It was found that reaction is complete even without catalysts, when used PET (bottle grade) and diamines are refluxed in certain solvents like xylene for four hours only. In other polymer grades of PET also, reaction proceeds on similar lines but time taken is more.

### EXAMPLE-1

A three necked, 500 ml round-bottomed flask equipped with a heating mantle, overhead stirrer, water condenser, nitrogen gas sparging tube and a thermo well pocket containing thermometer (50°C to 300°C range) was charged with 30 gms of PET (in the form of granules or powder or small cut pieces) and 60 gms of a polyamine e.g. tetraethylene pentamine in 200 ml of xylene solution. A current of dry nitrogen was constantly maintained. Slowly the mixture was heated to reflux temperature of xylene and then held there for 4 hours. At the end of reaction the solvent was distilled off and the unreacted polyamines were recovered under vacuum. The resulting product, recovered in quantitative yields, is a semi-viscous liquid at ambient temperatures. The IR spectra of the reaction product mixture showed peaks at 1632.4 cm⁻¹, 1554.4 cm⁻¹ confirming the formation of amide functional group in the product mixture. The residue was diluted with water (100ml) and refluxed for 5 minutes and allowed to cool for 5 hours when a yellow solid product, hygroscopic in nature, was obtained and filtered and dried (m.p 45°C-47°C). The crude product mixture or the purified solid product showed excellent anti-stripping properties when blended with bitumen in 0.3 % to 0.5% dosages and tested through hot water boiling tests both before and after thin film oxidation tests (TFOT). Marshall Stability test results are shown in Table 2 confirming full compatibility of invented product with bitumen.

### EXAMPLE-2

A three necked, 500 ml round-bottomed flask equipped with a heating mantle, overhead stirrer, water, condenser, nitrogen gas spurging tube and a thermo well pocket containing thermometer (50°C to 300°C range) with 30 gms of PET in the form of granules or powder or small cut pieces, 120 gms of pentaethylene hexamine and 150 ml toluene. A current of dry nitrogen is constantly maintained. Slowly mixture is heated and temperature is maintained at 130°C-140°C. The reaction was held under reflux for 8 hours. The solvent and excess polyamines were evaporated under high vacuum, resulting in a semi-viscous liquid at ambient temperature. Further processing is similar as given in example 1.

### EXAMPLE-3

A three necked, 500 ml round-bottomed flask equipped with a heating mantle, overhead stirrer, water condenser, nitrogen gas spurging tube and a thermo well pocket containing thermometer (50°C to 300°C range) was charged with 30 gms of PET in the form of granules or powder or small cut pieces, 60 gms of p-phenylene diamine, 0.6 gms of catalyst (Bismuth triflate) and 200 ml dichlorobenzene. A current of dry nitrogen was constantly maintained. The mixture was slowly heated. The temperature of the reaction mixture was raised to 160°C and refluxed for 4 hours while removing the water of reaction. The solvent and excess polyamines were evaporated under high vacuum, resulting in a semi-viscous liquid at ambient temperatures. Further processing was similar as described in example 1 above.

**Table 1**

| **Typical Reaction Conditions for Synthesis of Developed Antistripping Chemicals** | | | | | |
|---|---|---|---|---|---|
| Expt. No | CATALYST | SOLVENT and temperature | PET & AMINES | Reaction Time (hrs) | IR DATA representing Amide functionality |
| 1 | No catalyst | TOLUENE | PET (bottle Grade) + TETRAETHYLENE PENTAMINES | 8 | 1632.4, 1554.4 |
| 2 | SODIUM ACETATE | TOLUENE (Temperature 110°C) | PET (bottle Grade) +TETRAETHYLEN E PENTAMINES | 8 | 1632.9, 1552.5 |
| 3 | NO CATALYST | TOLUENE (Temperature 110°C) | PET (fiber grade) + TETRAETHYLENE PENTAMINES | 18 | 1632.4, 1554.4 |
| 4 | NO CATALYST | XYLENE (Temperature 140°C) | PET (bottle Grade) + TETRAETHYLENE PENTAMINES | 4 | 1637.6, 1549.5 |
| 5 | SODIUM ACETATE | XYLENE (Temperature 140°C) | PET (bottle Grade) + TETRAETHYLENE PENTAMINES | 4 | 1632.9, 1552.5 |

**Table 2**

| **Hot Water Immersion Tests Data** | | | | | |
|---|---|---|---|---|---|
| Data given in the table is the Percentage of coating by Antistripping blended bitumen on the surface of aggregate | | | | | |
| | **Before TFOT** | | | | **After TFOT** |
| **Reaction products** | **Bitumen: 99.7** | **Bitumen: 99.6** | **Bitumen: 99.5** | **Bitumen: 99.0** | **Bitumen: 99.5** |
| | **Reaction Product:0.3%** | **Reaction Product:0.4%** | **Reaction Product:0.5%** | **Reaction Product: 1 %** | **Reaction Product:0.5%** |
| A | 75% TO 80% | 85% TO 90% | 100% | 100% | 100% |
| B | 75% TO 80% | 85% TO 90% | 100% | 100% | 100% |
| C | 75% TO 80% | 85% TO 90% | 100% | 100% | 100% |
| D | 75% TO 80% | 85% TO 90% | 100% | 100% | 100% |

| | | | | | |
|---|---|---|---|---|---|
| **Reaction Product A:** PET (Used Bottle grade) and TRI ETHYLENE TERAMINES **Reaction Product B:** PET (fiber grade) and TRI-ETHYLENE TETRAMINES **Reaction Product C:** PET (Used Bottle grade) and TETRAETHYLENE PENTAMINES **Reaction Product D:** PET (fiber grade) and TETRAETHYLENE PENTAMINES | | | | | |

**Table 3**

| **Marshal Stability Test** | | |
|---|---|---|
| Binder content | **(Marshall Strength KN / Flow in mm)*** Compaction temp: 14 1°C | |
| | NEAT BITUMEN(VG-10) | Reaction product of TETA and PET at 0.5% dosages |
| 5% | 11.9/2.24 | 12.47/2.41 |
| 5% | 12.30/2.43 | 14.94/1.96 |
| 5% | 13.15/2.80 | 14.34/1.68 |
| **Average of 5% dosage** | **12.45/2.49** | **13.76/2.01** |
| 6% | 13.55/2.39 | 15.29/2.83 |
| 6% | 14.58/2.55 | 16.40/2.21 |
| 6% | 14.09/2.52 | 15.69/2.59 |
| **Average of** 6% dosage | **14.07/2.48** | **15.79/2.54** |
| 6.5% | 12.15/3.35 | 11.33/2.87 |
| 6.5% | 11.30/4.15 | 11.87/3.03 |
| 6.5% | 11.59/4.75 | 12.96/2.47 |
| **Average of** 6.5% dosage | **11.68/4.08** | **12.05/2.79** |
| ****Retained Marshall strength** | | = 13.32/15.79 × 100% = **84.35%** |

| | | |
|---|---|---|
| **Repeatability: As per ASTM D 6927-04, variation of 16% in Strength and 26% for flow is permitted)* **Retain Marshall = S₁/S₀ × 100% (Where S₁ = Marshall Stability for specimens immersed in Water bath for 24h, S₀ = Marshall Stability for specimens immersed in Water bath for 30min | | |

**Table 4**

| **Physio Chemical Properties of 80/100 Penitration Grade Bitumen** | | |
|---|---|---|
| **Properties** | **Test values** | **Referral specifications** |
| **Compositional Analysis (%)** | Percentage (%) | |
| **Saturates** | 6% | |
| **Aromatics** | 51% | ASTM D 2007 |
| **Resins** | 24% | |
| **Asphaltene** | 19% | |

**Table 5**

| **Properties of VG10 Bitumen containing 0.5% of developed antistripping chemicals** | | | | | | |
|---|---|---|---|---|---|---|
| **Properties** | **Test values** | | | | | **Referral specification** |
| | **Neat bitumen** | **Product PET A*** | **Product PET B*** | **Product PET C*** | **Product PET D*** | |
| ABSOLUTE VISCOSITY (60°C), Poise | 1135 | 1840.79 | 1855.56 | 1721.47 | 1713 | IS1206 (PART2) |
| KINEMETIC VISCOSITY (135°C) | 297 | 440.65 | 409.67 | 418.6 | 411.29 | IS1206 (PART3) |
| PENETRATION 25 C (100 G 5 S), 0.1MM | 88 | 70.3 | 71.5 | 71 | 65.7 | IS 1203/1978 |
| SOFTENING POINT (Ring and Ball), °C, Minimum | 45.5 | 47.5°C | 46.5°C | 48°C | 47.8°C | IS 1205/1978 |
| DUCTILITY AT 27° C (5 CM/MIN) | 100+ | 100+ | 100+ | 100+ | 100+ | IS 1208 : 1978 Min |
| FLASH POINT open cup, °C | 350+ | 350+ | 350+ | 350+ | 350+ | IS1209 |

**Table 6**

| **Properties of PET Polymers** | |
|---|---|
| **Intrinsic viscosity ranges of PET** | **Application fields** |
| 0.40 - 0.70 dℓ/g | **Fiber grade** |
| | Textile |
| 0.72 - 0.98 dℓ/g | Technical, tire cord |
| 0.60 - 0.70 dℓ/g | **Film grade** |
| | BoPET (biaxial oriented PET film) |
| 0.70 - 1.00 dℓ/g | (Sheet grade for thermoforming) |
| 0.70 - 0.78 dℓ/g | **Bottle grade** |
| | (Water bottles flat) |
| 0.78 - 0.85 dℓ/g | (Carbonated soft drink grade) |
| 2.00 dℓ/g | **Engineering plastic** |

**Table 7**

| **Typical properties polyester chips sourced from Reliance Industry Limited** | | | |
|---|---|---|---|
| **Sr. No.** | **Parameter** | **Units** | **Typical Results** |
| 1 | I.V. at 25°C (in Phenol :TCE 60:40 w/w) | dL/g | 0.940 |
| 2 | DEG | wt% | 1.05 |
| 3 | -COOH | meq/kg | 29 |
| 4 | Bulk density of chips | nos./g | 52 |
| 5 a) | Colour | 'L' value | 88.5 |
| 5 b) | | 'a' value | -1.2 |
| 5 c) | | 'b' value | 6.7 |

## Claims

1. An Environment Friendly Method for disposal of waste plastics through conversion of polyethylene terephthalate (PET) polymers to anti-stripping compounds for bitumen comprising the steps of :
- treating PET and a polyamine in a solvent under dry nitrogen atmosphere
- heating the mixture slowly,
- distilling off the solvent at the end of reaction
- separating the solid product of the reaction,
***characterized in that*** the polyamine undergoes aminolysis reaction with PET without any catalyst and at temperatures in the range of 110 °C to 160 °C.

2. The method as claimed in claim 1, wherein PET polymer is either recycled or virgin and is used as synthon.

3. The method as claimed in claim 1, wherein the wt by wt ratio of amine to PET is in the range of 1:1 to 1:6.

4. The method as claimed in claim 1, wherein the method achieves the maximum conversion efficiency of 100% while converting into diamino diamido product mixture.

5. The method as claimed in claim 1, wherein the solvent can be toluene, xylene, decalin, tetralin, o-chlorobenzene or a mixture thereof.

6. The method as claimed in claim 1, wherein the polyamine can be tetraethylenepentamine (TEPA), triethylenetetramine (TETA), diethylenetriamine (DETA), ethylenediamine (EDA), propanediamine (PDA), hexamethylene triamine (HMT) or p-Phenylenediamine.

7. The method as claimed in claim 1, wherein reaction time of condensation of polyamine and PET is about 4 hours.

8. A method for preparing a bituminous concrete having high anti-stripping properties, comprising the steps of adding minor amounts in the range of 0.1 to 5% by weight of the anti-stripping compound, prepared as claimed in claims 1 to 7, to the bitumen cement and mixing with an aggregate of rocks.

## Patentansprüche

1. Umweltfreundliches Verfahren zur Entsorgung von Kunststoffabfällen durch Umwandlung von Polyethylenterephthalat-(PET)-Polymeren in Ablöseschutzverbindungen für Bitumen, umfassend die folgenden Schritte:
- Behandeln von PET und einem Polyamin in einem Lösungsmittel unter Trockenstickstoffatmosphäre,
- langsames Erwärmen der Mischung,
- Abdestillieren des Lösungsmittels am Ende der Reaktion
- Abtrennen des festen Produkts der Reaktion,
**dadurch gekennzeichnet, dass** das Polyamin eine Aminolysereaktion mit PET ohne jeglichen Katalysator und bei Temperaturen im Bereich von 110 °C bis 160 °C durchläuft.

2. Verfahren nach Anspruch 1, wobei das PET-Polymer entweder recycelt oder neu ist und als Synthon verwendet wird.

3. Verfahren nach Anspruch 1, wobei das Gewichtsverhältnis des Amins zum PET im Bereich von 1:1 bis 1:6 liegt.

4. Verfahren nach Anspruch 1, wobei das Verfahren die maximale Umwandlungsleistung von 100 % beim Umwandeln in eine Diamin-Diamid-Produktmischung erreicht.

5. Verfahren nach Anspruch 1, wobei das Lösungsmittel Toluol, Xylol, Decalin, Tetralin, o-Chlorbenzol oder eine Mischung davon sein kann.

6. Verfahren nach Anspruch 1, wobei das Polyamin Tetraethylenpentamin (TEPA), Triethylentetramin (TETA), Diethylentriamin (DETA), Ethylendiamin (EDA), Propandiamin (PDA), Hexamethylentriamin (HMT) oder p-Phenylendiamin sein kann.

7. Verfahren nach Anspruch 1, wobei die Reaktionszeit der Kondensation von Polyamin und PET etwa 4 Stunden beträgt.

8. Verfahren zum Herstellen eines bituminösen Betons, der hohe Ablöseschutzeigenschaften aufweist, umfassend die Schritte des Zugebens kleinerer Mengen im Bereich von 0,1 bis 5 Gewichts-% der Ablöseschutzverbindung, hergestellt nach den Ansprüchen 1 bis 7, zu dem Bitumenzement und des Mischens mit einem Gesteinszuschlag.

## Revendications

1. Procédé écologique d'élimination de déchets plastiques par conversion de polymères de poly(téréphtalate d'éthylène) (PET) en des composés d'adhésivité pour du bitume, comprenant les étapes :
- de traitement de PET et d'une polyamine dans un solvant dans une atmosphère sèche d'azote,
- de chauffage lent du mélange,
- d'élimination par distillation du solvant à la fin de la réaction,
- de séparation du produit solide de la réaction,
**caractérisé en ce que** la polyamine subit une réaction d'aminolyse avec un PET sans aucun catalyseur et à des températures dans la plage de 110 °C à 160 °C.

2. Procédé selon la revendication 1, dans lequel le polymère PET est soit recyclé soit vierge, et est utilisé comme un synthon.

3. Procédé selon la revendication 1, dans lequel le rapport pondéral entre l'amine et le PET est dans la plage de 1:1 à 1:6.

4. Procédé selon la revendication 1, dans lequel le procédé accomplit un rendement de conversion maximal de 100 % pendant la conversion en un mélange de produit diamino-diamido.

5. Procédé selon la revendication 1, dans lequel le solvant peut être du toluène, du xylène, de la décaline, de la tétraline, du o-chlorobenzène ou un mélange de ceux-ci.

6. Procédé selon la revendication 1, dans lequel la polyamine peut être de la tétraéthylènepentamine (TEPA), de la triéthylènetétramine (TETA), de la diéthylènetriamine (DETA), de l'éthylènediamine (EDA), de la propanediamine (PDA) de la hexaméthylènetriamine (HMT) ou de la p-phénylénédiamine.

7. Procédé selon la revendication 1, dans lequel le temps de réaction de condensation de la polyamine et du PET est d'environ 4 heures.

8. Procédé de préparation d'un béton bitumineux présentant de hautes propriétés d'adhésivité, comprenant les étapes d'ajout de quantités faibles, dans la plage de 0,1 à 5 % en poids, du composé d'adhésivité, préparé selon les revendications 1 à 7, au ciment bitumineux, et de mélange avec un agrégat de roches.
